# FASCICULE DE BREVET EUROPEEN

(11) **EP 2 141 403 B1**
(45) Date de publication et mention de la délivrance du brevet: **18.04.2012**
(21) Numéro de dépôt: 09164022.7
(22) Date de dépôt: 29.06.2009
(51) Int. Cl.: F16L 39/00, F16L 37/56

(54) **Ensemble de connexion et procédé de connexion d'un tel ensemble**
Verbindungseinheit und Verbindungsverfahren einer solchen Einheit
Connection unit and method for connecting such a unit

(30) Priorité: 30.06.2008 FR 0854391
(43) Date de publication de la demande: 06.01.2010
(73) Titulaire: Staubli Faverges, 74210 Faverges (FR)
(72) Inventeur: Tiberghien, Alain-Christophe, 74320 Sevrier (FR); Guin, Philippe, 74000 Annecy (FR)
(74) Mandataire: Myon, Gérard Jean-Pierre

(56) Documents cités:
- FR-A- 2 350 496
- JP-A- 61 014 008
- US-A- 6 017 065

## Description

La présente invention se rapport au domaine du raccordement de circuits de type(s) hydraulique, pneumatique et/ou électrique, par l'intermédiaire de plusieurs éléments de connecteurs complémentaires montés, d'une part, sur une plaque dite mobile et, d'autre part, sur une plaque dite fixe. La présente invention concerne tout d'abord un ensemble de connexion d'une telle plaque mobile à au moins une telle plaque fixe. Par ailleurs, la présente invention concerne un procédé de connexion d'une telle plaque mobile à au moins une plaque fixe.

Pour raccorder entre eux des circuits de type(s) hydraulique, pneumatique et/ou électrique, il faut accoupler simultanément et de manière colinéaire des éléments de connecteurs hydraulique(s), pneumatique(s) et/ou électrique(s) qui sont complémentaires et qui sont montés sur deux plaques en regard, à savoir une plaque mobile et une plaque essentiellement fixe. En général, le positionnement relatif de ces deux plaques, avant leur rapprochement, peut présenter un défaut de centrage, c'est-à-dire un décalage dans le plan d'une des plaques, ainsi qu'un défaut de parallélisme, c'est-à-dire un écart angulaire entre les plans de ces plaques.

JP-A-61 014 008 décrit un ensemble de connexion de l'art antérieur qui comprend un vérin linéaire afin de déplacer la plaque mobile vers la plaque fixe suivant une direction de connexion qui est le plus souvent horizontale. Pour permettre un flottement de la plaque mobile approchant de la plaque fixe, et compenser de tels défauts de positionnement, l'ensemble de connexion comporte en outre un dispositif de flottement. Un tel dispositif de flottement peut par exemple comprendre des ressorts linéaires montés entre la plaque mobile et la tige du vérin. Dans JP-A-61 014008, le dispositif de flottement 28 est interposé entre l'extrémité de la tige du vérin 15, 18, 17 et une pièce flottante 26 à laquelle est raccordée la plaque mobile A par l'intermédiaire des connecteurs 4b/35. La plaque mobile est en quelque sorte suspendue par le dispositif de flottement en porte-à-faux à l'extrémité de la tige du vérin. En d'autres termes, cette plaque mobile flotte par rapport au support fixe du vérin.

La plaque mobile et la plaque fixe sont munies d'au moins un organe de centrage et d'au moins un membre de centrage qui présentent des formes complémentaires. Lorsque la plaque mobile est déplacée vers la plaque fixe, l'organe de centrage et le membre de centrage coopèrent, de façon à positionner la plaque mobile par rapport à la plaque fixe, ce qui permet d'accoupler de manière colinéaire les éléments de connecteurs complémentaires. L'organe de centrage et le membre de centrage guident la plaque mobile jusqu'à la plaque fixe lors de leur connexion. En général, l'organe de centrage et le membre de centrage sont composés respectivement d'une douille et d'une colonne.

Cependant, après une connexion des plaques, la position de la plaque mobile s'est adaptée aux défauts de positionnement relatif des plaques. Par conséquent, après que le vérin a déconnecté et éloigné la plaque mobile de la plaque fixe, la plaque mobile se trouve rétractée dans une position qui peut être en décalage par rapport à une position antérieure rétractée correspondant à la moyenne de l'amplitude du flottement. Or, ce décalage, induit par chaque connexion à une plaque fixe et que le dispositif de flottement ne parvient pas à compenser lors de la déconnexion, rend plus difficile une connexion ultérieure. La tolérance de la plaque mobile aux défauts de positionnement relatif des plaques s'en trouve donc réduite.

Entre outre, comme la plaque mobile est suspendue en porte-à-faux par le dispositif de flottement, le poids de la plaque mobile et de ses composants peut modifier la position de la plaque mobile avant une connexion, et donc l'éloigner de sa position moyenne théorique. Une telle modification de la position de la plaque mobile réduit également sa tolérance aux défauts de positionnement relatif des plaques.

C'est pourquoi un ensemble de connexion de l'art antérieur nécessite des jeux importants et des surfaces de guidage relativement grandes entre organe(s) de centrage et membre(s) de centrage, en particulier dans les deux dimensions du plan de la plaque mobile ou de la plaque fixe. De telles surfaces de guidage augmentent l'encombrement et la masse des organes et membres de centrage.

La présente invention vise notamment à remédier à ces inconvénients, en proposant un ensemble de connexion avec une plaque mobile qui présentent une tolérance aux défauts de positionnement relatif élevée et/ou les composants de guidage sont relativement peu encombrants.

A cet effet, l'invention a pour objet un ensemble de connexion d'une plaque mobile à au moins une plaque fixe, pour raccorder des circuits de type hydraulique, pneumatique et/ou électrique, ledit ensemble de connexion comprenant :
- une plaque mobile comportant :
   - plusieurs éléments de connecteurs aptes à être accouplés à des éléments de connecteurs complémentaires montés sur la plaque fixe ;
   - au moins un organe de centrage apte à coopérer avec la plaque fixe à l'état connecté des plaques, de façon à positionner la plaque mobile par rapport à la plaque fixe ;
- un actionneur comportant :
   - un support fixe ;
   - un organe mobile apte à déplacer, suivant une direction de connexion, la plaque mobile par rapport au support fixe, entre une première position rétractée correspondant à un état déconnecté de la plaque mobile par rapport à la plaque fixe et une deuxième position correspondant à un état connecté de ces plaques ;
   - un dispositif de flottement agencé entre l'organe mobile de l'actionneur et la plaque mobile, de façon à permettre, lorsque la plaque mobile est entre ses première et deuxième positions, au moins un débattement de la plaque mobile par rapport au support fixe en rotation autour et/ou en translation suivant au moins un axe perpendiculaire à la direction de connexion ;
cet ensemble de connexion étant caractérisé en ce que la plaque mobile comporte en outre au moins un membre de positionnement, en ce que le support fixe comporte en outre au moins un organe de positionnement solidarisé au support fixe et en ce que le ou chaque membre de positionnement est apte à coopérer avec le ou chaque organe de positionnement de façon à positionner la plaque mobile par rapport au support fixe, alors que la plaque mobile est dans la première position.

Selon d'autres caractéristiques avantageuses mais facultatives de l'invention, prises isolément ou selon toute combinaison techniquement admissible :
- le ou chaque organe de centrage est destiné à coopérer par complémentarité de formes avec un membre de centrage correspondant disposé sur la plaque fixe et le ou chaque organe de centrage est formé par une douille de centrage ou par une colonne de centrage ;
- le ou chaque membre de positionnement et le ou chaque organe de positionnement sont aptes à coopérer par complémentarité de formes et le ou chaque membre de positionnement est formé par une colonne de positionnement ou par une douille de positionnement, le ou chaque organe de positionnement étant respectivement formé par une douille de positionnement ou par une colonne de positionnement ;
- au moins un organe de centrage est coaxial à un membre de positionnement ;
- au moins un organe de centrage est réalisé au sein d'un membre de positionnement ;
- la ou chaque colonne de positionnement et la ou chaque douille de positionnement présentent une symétrie de révolution autour d'un axe qui est sensiblement parallèle à la direction de connexion lorsque la plaque mobile est dans la première position ;
- la ou chaque douille de positionnement et la ou chaque colonne de positionnement comportent respectivement une succession de surfaces coniques et de surfaces cylindriques et ces surfaces coniques et cylindriques ménagées respectivement sur la douille de positionnement, d'une part, et sur la colonne de positionnement, d'autre part, sont sensiblement complémentaires avec des dimensions décroissantes, de façon à permettre l'introduction avec un jeu radial décroissant de la ou chaque colonne de positionnement dans une douille de positionnement correspondante ;
- la surface conique située à l'extrémité, du côté du support fixe, du ou de chaque membre de positionnement et la surface conique située à l'extrémité, du côté de la plaque mobile, du ou de chaque organe de positionnement ont des demi-angles au sommet respectifs compris entre 20 ° et 40 °, de préférence entre 27 ° et 33 ° ;
- le dispositif de flottement comprend au moins un organe élastique qui est disposé entre la plaque mobile et l'organe mobile et qui est composé d'un empilement de rondelles élastiques ou d'un ressort linéaire travaillant en compression ; et
- le ou chaque organe de positionnement est agencé sur le support fixe de sorte que le ou chaque membre de positionnement se trouve en position moyenne dans l'amplitude du débattement permis par le dispositif de flottement, lorsque l'organe mobile positionne la plaque mobile dans la première position, déconnectée et rétractée ;

D'autre part, la présente invention a pour objet un procédé de connexion d'une plaque mobile à au moins une plaque fixe, pour raccorder des circuits de type(s) hydraulique, pneumatique et/ou électrique, ladite plaque mobile appartenant audit ensemble de connexion et comportant :
- plusieurs éléments de connecteurs ;
- au moins un organe de centrage ;
- au moins un membre de positionnement ;
ladite plaque fixe comportant :
- plusieurs éléments de connecteurs aptes à être accouplés aux éléments de connecteurs de la plaque mobile ;
- au moins un membre de centrage apte à coopérer avec l'organe de centrage à l'état connecté des plaques ;
ledit ensemble de connexion comprenant en outre un actionneur qui comporte :
- un support fixe ;
- un organe mobile apte à déplacer, suivant une direction de connexion, la plaque mobile par rapport au support fixe entre une première position rétractée correspondant à un état déconnecté de la plaque mobile par rapport à la plaque fixe et une deuxième position correspondant à un état connecté de ces plaques ;
- un dispositif de flottement agencé entre l'organe mobile et la plaque mobile, de façon à permettre au moins un débattement de la plaque mobile par rapport au support fixe en rotation autour et/ou en translation suivant au moins un axe perpendiculaire à la direction de connexion ;
ce procédé de connexion étant caractérisé en ce qu'il comprend les étapes consistant à :
b) amener en engagement au moins un membre de positionnement porté par la plaque mobile avec un organe de positionnement correspondant porté par le support fixe de façon à positionner la plaque mobile par rapport au support fixe alors que la plaque mobile est dans la première position ;
c) commander l'actionneur pour déplacer la plaque mobile vers la plaque fixe suivant une direction de connexion ;
d) amener en engagement le ou chaque membre de centrage avec l'organe de centrage correspondant, de façon à positionner la plaque mobile par rapport à la plaque fixe ;
e) accoupler les éléments de connecteurs respectifs de la plaque mobile et de la plaque fixe.

Selon d'autres caractéristiques avantageuses mais facultatives de ce procédé, il comprend une étape préalable consistant à placer l'ensemble de connexion dans une position initiale déterminée de façon à ce que la distance maximale, selon la direction de connexion, entre, d'une part, une extrémité d'un membre de centrage de la plaque fixe, qui est destinée à venir en engagement avec un organe de centrage, et, d'autre part, une extrémité de l'organe de positionnement correspondant du support fixe, qui est destinée à venir en engagement avec un membre de positionnement, soit inférieure à la distance maximale entre, d'une part, une extrémité de l'organe de centrage de la plaque mobile, qui est destinée à venir en engagement avec le membre de centrage et, d'autre part, une extrémité du membre de positionnement correspondant de la plaque mobile, qui est destinée à venir en engagement avec l'organe de positionnement.

L'invention sera bien comprise et d'autres avantages de celle-ci ressortiront aussi à la lumière de la description qui va suivre, donnée uniquement à titre d'exemple non limitatif et faite en référence aux dessins annexés, dans lesquels :
- la figure 1 est une vue de côté et en coupe partielle d'un ensemble de connexion conforme à l'invention à l'état déconnecté d'une plaque mobile conforme à l'invention et d'une plaque fixe, la plaque mobile étant dans une première position rétractée par rapport à l'ensemble de connexion ;
- la figure 2 est une vue à plus grande échelle du détail Il à la figure 1 ;
- la figure 3 est une vue en perspective de l'ensemble de connexion de la figure 1 ;
- la figure 4 est une vue en perspective de l'ensemble de connexion de la figure 1 à l'état connecté de la plaque mobile sur la plaque fixe, la plaque mobile étant dans une deuxième position ;
- la figure 5 est une vue en coupe partielle et à plus grande échelle d'une partie de l'ensemble de connexion de la figure 1 et d'une partie de la plaque fixe de la figure 1 ;
- les figures 6 et 7 sont des vues analogues à la figure 5, au cours de la connexion de la plaque mobile sur la plaque fixe ; et
- la figure 8 est vue analogue à la figure 5, à l'état connecté de la plaque mobile sur la plaque fixe.

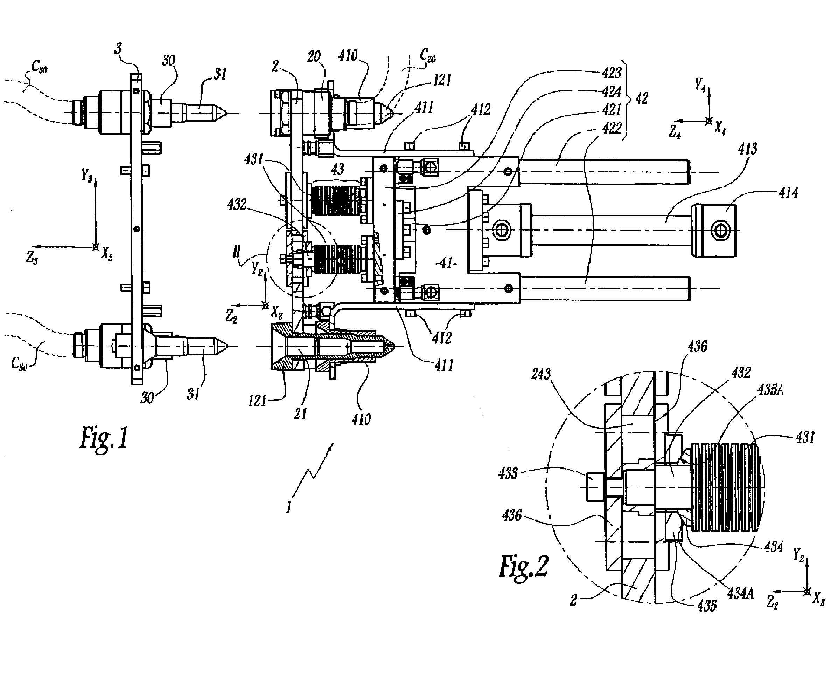

Les figures 1 à 4 illustrent un ensemble de connexion 1 comprenant une plaque dite mobile 2 et un actionneur 4, pour connecter la plaque mobile 2 sur une plaque dite fixe 3. La plaque mobile 2 et la plaque fixe 3 ont des formes respectives essentiellement planes et rectangulaires. La plaque mobile 2 s'étend principalement selon un plan X₂-Y₂ et la plaque fixe 3 s'étend principalement selon un plan X₃-Y₃, ces plans étant verticaux.

Dans la configuration de la figure 1, la plaque mobile 2 et la plaque fixe 3 sont à l'état déconnecté et l'actionneur 4 supporte la plaque mobile 2 en position rétractée, dans laquelle un axe 2₂ de la plaque mobile 2 est parallèle à un axe Z₄ de l'actionneur 4. Dans cette première position rétractée de la plaque mobile 2, le plan X₂-Y₂ lié à la plaque mobile 2 est parallèle à un plan X₄-Y₄ lié à l'actionneur 4, mais il est approximativement parallèle et peut présenter un défaut de parallélisme par rapport au plan X₃-Y₃ lié à la plaque fixe 3 comme cela est détaillé ci-après.

La plaque mobile 2 comporte des éléments de connecteurs, dont certains sont visibles aux figures 1, 3 et 4 avec la référence 20. La plaque fixe 3 comporte aussi des éléments de connecteurs, dont certains sont visibles aux figures 1, 3 et 4 avec la référence 30, lesquels sont de formes complémentaires aux éléments de connecteurs 20 de la plaque mobile 2. Ainsi, les éléments de connecteurs 20 sont aptes à être accouplés aux éléments de connecteurs 30, de façon à raccorder des circuits flexibles Z20 et **C₃₀** de type hydraulique, pneumatique ou électrique raccordés respectivement sur les éléments de connecteurs 20 et 30.

La plaque mobile 2 et la plaque fixe 3 peuvent comporter d'autres éléments de connecteurs complémentaires non représentés, de façon à raccorder d'autres circuits de type(s) hydraulique, pneumatique et/ou électrique. Lorsque la plaque mobile 2 est connectée à la plaque fixe 3, des flux hydraulique, pneumatique ou électrique peuvent circuler par l'intermédiaire d'éléments de connecteurs tels que 20 et 30.

L'actionneur 4 comprend un support fixe 41, un organe mobile 42 déplaçable par un vérin linéaire et un dispositif de flottement 43. Dans l'exemple de la figure 1, le support fixe 41 comprend un boîtier de vérin de forme parallélépipédique et un bras 413 qui sert de logement à la tige de vérin rétractée. Le support fixe 41 est monté sur un dispositif de transport ou un support non représenté.

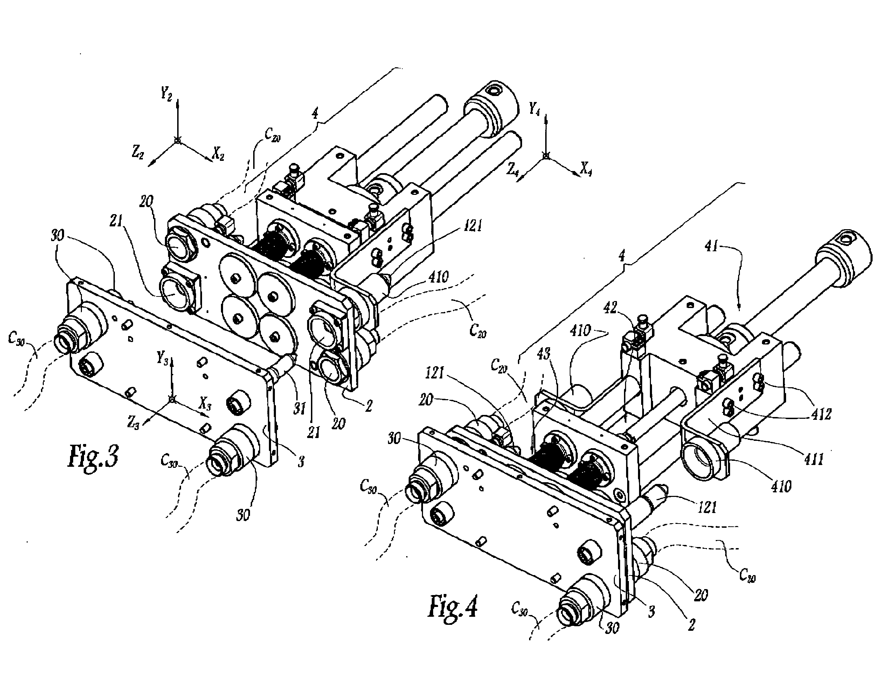

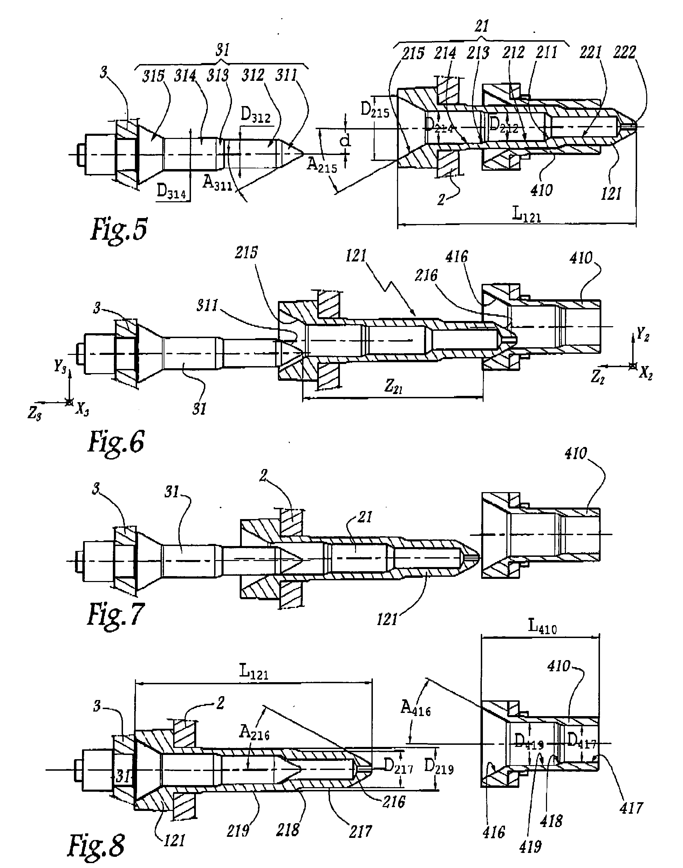

Comme le montre la comparaison entre les figures 3 et 4, l'organe mobile 42 est adapté pour déplacer, suivant l'axe Z₄, la plaque mobile 2 par rapport au support fixe 41 et jusqu'à la plaque fixe 3 pour que la plaque 2 parvienne dans une deuxième position représentée aux figures 4 et 8 où les plaques 2 et 3 sont connectées. Pour cela, l'organe mobile 42 est composé d'une tige de vérin 421, de deux tiges de guidage 422 et d'un chariot 423 sur lequel est montée une partie du dispositif de flottement 43. La tige de vérin 421 est mobile suivant l'axe Z₄ qui correspond sensiblement à la direction de connexion de la plaque mobile 2 sur la plaque fixe 3. La tige de vérin 421 est reliée, d'une part, au support fixe 41 et, d'autre part, au chariot 423 par l'intermédiaire d'une bride 424.

Le dispositif de flottement 43 comprend quatre organes élastiques 431, dont deux sont visibles à la figure 1 et sous lesquels sont respectivement situés les deux autres organes élastiques. Chaque organe élastique 431 est ici constitué d'un empilement de rondelles Belleville flexibles et montées précontraintes autour d'un arbre 432 respectif. Comme le montre la figure 2, les arbres 432 sont fixés au chariot 423. Deux bagues de butée 436 sont montées sur chaque arbre 432 et sont traversées par une vis de fixation 433 correspondante, de façon à encadrer la plaque mobile 2. Un espace annulaire 243 est ménagé radialement entre la plaque mobile 2 et chaque arbre 432. Les vis de fixation 433 et les bagues de butée 436 forment des moyens de liaison de la plaque mobile 2 avec le dispositif de flottement 43.

Autour de chaque arbre 432 sont montées, entre la plaque mobile 2 et l'organe élastique 431, une bague 434 présentant une face sphérique convexe 434A et une bague 435 présentant une face sphérique concave 435A. La face convexe 434A et la face concave 435A sont maintenues en appui l'une sur l'autre par l'organe élastique 431, définissant ainsi une rotule d'articulation de la plaque mobile 2 par rapport à l'organe mobile 42.

Ainsi, le dispositif de flottement 43 relie l'organe mobile 42 à la plaque mobile 2 par des moyens de liaison décrits ci-avant qui permettent au moins un débattement de la plaque mobile 2 par rapport au support fixe 41 de l'actionneur 4. La plaque mobile 2 est donc suspendue en porte-à-faux à l'extrémité de l'actionneur 4. La plaque mobile 2 présente ainsi des débattements angulaires et linéaires par rapport aux axes X₄ et Y₄ qui sont liés à l'actionneur 4 et qui sont perpendiculaires à la direction de connexion Z₄.

En d'autres termes, le dispositif de flottement 43 est agencé entre l'organe mobile 42 et la plaque mobile 2, de façon à permettre au moins un débattement de la plaque mobile 2 par rapport au support fixe 41 en rotation autour et/ou en translation suivant les axes X₄ et Y₄. Par « débattement » on désigne l'amplitude du mouvement de la plaque mobile par rapport à la position rétractée, qu'elle présente à l'état déconnecté des plaques fixe 3 et mobile 2 fixe. Par extension, la plaque mobile 2 présente également un débattement par rapport à la plaque fixe 3.

Pour guider la plaque mobile 2 vers la plaque fixe 3 lors de leur connexion, la plaque mobile 2 comporte en outre deux organes de centrage qui sont aptes à coopérer avec deux membres de centrage de formes complémentaires de la plaque fixe 3. Dans l'exemple des figures, les organes de centrage sont constitués de douilles de centrage 21, tandis que les membres de centrage sont constitués de colonnes de centrage 31.

Les douilles de centrage 21 sont montées au niveau de deux coins diagonalement opposés de la plaque mobile 2. Les colonnes de centrage 31 occupent des positions correspondantes sur la plaque fixe 3 et elles sont donc ici montées au niveau de deux coins diagonalement opposés de la plaque fixe 3, dans la mesure où la plaque fixe 3 et la plaque mobile 2 ont des dimensions analogues. Les douilles de centrage 21 et les colonnes de centrage 31 permettent de positionner la plaque mobile 2 par rapport à la plaque fixe 3, comme cela est décrit ci-après.

Comme le montre plus en détail la figure 5, la douille de centrage 21 comprend une succession de surfaces internes coniques qui sont reliées deux à deux par des surfaces internes cylindriques. Les surfaces internes coniques et les surfaces internes cylindriques sont coaxiales et, dans l'exemple, à base circulaire.

Chaque douille de centrage 21 comprend ainsi une embouchure 215 tronconique, suivie d'une première surface cylindrique 214, puis d'une première réduction tronconique 213, d'une deuxième surface cylindrique 212 et d'une deuxième réduction tronconique 211. La réduction tronconique 211 débouche dans une chambre cylindrique 221 qui se prolonge par un canal 222. La chambre cylindrique 221 et le canal 222 permettent d'évacuer l'air devant la colonne de centrage, évitant ainsi la présence d'air comprimé susceptible de s'opposer à la connexion.

De façon complémentaire, la surface externe de chaque colonne de centrage 31 comprend une embase tronconique 315, suivie d'une première portion cylindrique 314, puis d'une réduction tronconique 313 elle-même suivie d'une deuxième portion cylindrique 312. Chaque colonne de centrage 31 se termine par une pointe conique 311. Chaque douille de centrage 21 présente ainsi une symétrie de révolution autour d'un axe parallèle à l'axe Z₂, alors que chaque colonne de centrage 31 présente une symétrie de révolution autour d'un axe parallèle à l'axe Z₃.

Dans la mesure où les dimensions, longueurs, diamètres et demi-angles au sommet ou conicité, des surfaces coniques et cylindriques correspondantes de chaque colonne de centrage 31 et de chaque douille de centrage 21 sont sensiblement équivalentes, la colonne de centrage 31 et la douille de centrage 21 ont des formes globalement sensiblement complémentaires, ce qui permet leur emboîtement avec un jeu radial décroissant lors du rapprochement de la plaque mobile 2 vers la plaque fixe 3 au moyen de l'actionneur 4. Ainsi, l'embase 315 et l'embouchure 215 présentent des géométries complémentaires, de même que la portion cylindrique 314 et la surface cylindrique 214, la réduction tronconique 313 et la réduction tronconique 213, la portion cylindrique 312 et la surface cylindrique 212, ainsi que la pointe conique 311 et la deuxième réduction tronconique 211. Chaque douille de centrage 21 est donc apte à coopérer par complémentarité de formes avec la colonne de centrage 31 correspondante.

A l'état connecté de la plaque mobile 2 sur la plaque fixe 3, tel qu'illustré à la figure 8, lorsque l'axe Z₂ est parallèle à l'axe Z₃, ces surfaces complémentaires se trouvent respectivement en regard les unes des autres, avec un jeu radial réduit et déterminé de manière à éviter le coincement entre chaque colonne de centrage 31 et chaque douille de centrage 21. En d'autres termes, le diamètre D₃₁₄ de la portion cylindrique 314 est légèrement inférieur au diamètre D₂₁₄ de la surface cylindrique 214, de même que le diamètre D₃₁₂ de la portion cylindrique 312 est légèrement inférieur au diamètre D₂₁₂ de la surface cylindrique 212.

Par ailleurs, la plaque mobile 2 comporte en outre deux membres de positionnement et le support fixe 41 comporte en outre deux organes de positionnement. Chaque membre de positionnement est apte à coopérer avec un organe de positionnement correspondant de façon à positionner la plaque mobile 2 par rapport au support fixe 41. Dans ce but, les membres de positionnement et les organes de positionnement ont des formes complémentaires, à l'instar des colonnes de centrage 31 et des douilles de centrage 21.

Dans l'exemple des figures, chaque membre de positionnement porté par la plaque mobile 2 est formé par une colonne de positionnement 121 et chaque organe de centrage porté par la plaque mobile 2 est formé par une douille de centrage 21. De plus, chaque douille de centrage 21 est réalisée au sein d'une colonne de positionnement 121, ce qui contribue à la compacité de l'ensemble de connexion 1. Ainsi, chaque colonne de positionnement 121 présente un évidement qui définit une douille de centrage 21 respective.

Chaque douille de centrage 21 et la colonne de positionnement 121 associée constituent donc deux parties 21 et 121 d'une même pièce, chacune de ces parties 21 et 121 remplissant une fonction propre de guidage. Cette pièce commune, qui peut être qualifiée de « douille-colonne » présente une surface interne servant de douille de centrage 21 et une surface externe servant de colonne de positionnement 121.

Les colonnes de positionnement 121 sont situées au niveau de deux coins diagonalement opposés de la plaque mobile 2, à l'instar des douilles de centrage associées 21. Chaque organe de positionnement monté sur le support fixe 41 est formé par une douille de positionnement 410 qui est apte à coopérer par complémentarité de formes avec une colonne de positionnement 121 respective.

Chaque douille de positionnement 410 est solidarisée à un support en équerre 411, lequel est solidarisé au support fixe 41 par des vis 412. Chaque douille de positionnement 410 occupe, sur le support fixe 41, une position telle que la colonne de positionnement 121 associée est en position moyenne de flottement, lorsque cette douille de positionnement 410 et cette colonne de positionnement 121 coopèrent en position rétractée de la plaque mobile 2.

Chaque douille de positionnement 410 et chaque colonne de positionnement 121 comportent respectivement une succession de surfaces coniques reliées deux à deux par des surfaces cylindriques. Comme dans le cas de la colonne de centrage 31 et de la douille de centrage 21, les surfaces coniques et cylindriques respectives de chaque douille de positionnement 410 et de chaque colonne de positionnement 121 ont des diamètres complémentaires successifs qui définissent un étagement décroissant dans la direction de connexion que représente l'axe Z₄. Un tel étagement permet l'introduction de chaque colonne de positionnement 121 dans une douille de positionnement 410 respective, avec un jeu radial décroissant.

Comme le montre la figure 8, une colonne de positionnement 121 comprend une première portion cylindrique externe 219 de diamètre D₂₁₉ suivie d'une réduction tronconique externe 218, d'une deuxième portion cylindrique externe 217 de diamètre D₂" et d'une pointe conique externe 216. Chaque douille de positionnement 410 comprend, de façon complémentaire, une embouchure tronconique 416, suivie d'une première surface interne cylindrique 419 de diamètre D₄₁₉, d'une réduction tronconique interne 418 et d'une deuxième surface interne cylindrique 417 débouchante et de diamètre D₄₁₇. Chaque colonne de positionnement 121 présente une symétrie de révolution autour d'un axe parallèle à l'axe Z₂, alors que chaque douille de positionnement 410 présente une symétrie de révolution autour d'un axe parallèle à l'axe Z₃.

Les dimensions, longueurs, diamètres et demi-angles au sommet ou conicité, des surfaces de guidage de chaque colonne de positionnement 121 et de chaque douille de positionnement 410 sont sensiblement équivalentes. Pour éviter tout coincement, un jeu radial de montage est prévu entre la surface externe de la colonne de positionnement 121 et la surface interne de la douille de positionnement 410.

Comme le montre la figure 5, durant la phase de connexion de la plaque mobile sur la plaque fixe et lorsqu'une douille de centrage 21 et une colonne de centrage 31 commencent à coopérer, la douille de centrage 21 se trouve en position moyenne de flottement, aux jeux radiaux près suivant les axes X₂ et Y_{2,} car chaque colonne de positionnement 121 est guidée dans la douille de positionnement 410 correspondante. Cette « position moyenne » est définie comme la position correspondant à la moyenne de l'amplitude du mouvement que permet le dispositif de flottement 43 à la plaque mobile 2 par rapport au support fixe 41. Par extension, l'expression « position moyenne » est employée pour des composants de la plaque mobile 2, tels qu'une colonne de positionnement 121.

Au début de cette coopération entre la douille de centrage 21 et la colonne de centrage 31, un décalage d existe dans le plan X₂-Y₂ entre l'extrémité de la colonne de centrage 31 et l'axe de la douille de centrage 21. Un défaut de parallélisme non représenté peut également exister entre l'axe de la colonne de centrage 31 et l'axe de la douille de centrage 21. Le décalage d et le défaut de parallélisme sont compatibles avec le débattement permis par le dispositif de flottement 43. En outre, le diamètre maximal D₂₁₅ de l'embouchure tronconique 215 est dimensionné notamment en fonction du décalage d.

Par ailleurs, les demi-angles au sommet des surfaces coniques des douilles de centrage 21 sont adaptés aux demi-angles au sommet des surfaces coniques des colonnes de centrage 31 correspondantes. En particulier, le demi-angle au sommet A₂₁₅ que forme une génératrice de l'embouchure tronconique 215 avec l'axe de la douille de centrage 21 est compris entre 20 ° et 40 °, de préférence entre 27° et 33°, et correspond sensiblement au demi-angle au sommet A₃₁₅ que forme une génératrice de l'embase conique 315 avec l'axe d'une colonne de centrage 31.

De même, le demi-angle au sommet A₂" que forme une génératrice de la deuxième réduction tronconique 211 avec l'axe de la douille de centrage 21 est compris entre 20° et 40°, de préférence entre 27° et 33°, et correspond sensiblement au demi-angle au sommet A₃₁₁ que forme une génératrice de la pointe conique 311 avec l'axe d'une colonne de centrage 31.

Dans le même but de faciliter l'engagement des membres et organes correspondants, le demi-angle au sommet A₂₁₆ de la pointe conique 216 d'une colonne de positionnement 121 et le demi-angle au sommet A₄₁₆ de l'embouchure tronconique 416 d'une douille de positionnement 410 sont équivalents et sont compris entre 20° et 40°, de préférence entre 27° et 33°. De même, le demi-angle au sommet A₂₁₈ de la réduction tronconique externe 218 correspond au demi-angle au sommet A₄₁₈ de la réduction tronconique interne 418. De telles conicités permettent d'éviter tout coincement lors de l'emboîtement ou du déboîtement des composants de guidage correspondants tout en limitant l'effort à appliquer par l'actionneur selon l'axe Z₄ pour provoquer le débattement de la plaque mobile 2 avec ses composants de guidage.

Selon une variante non représentée, chaque organe de centrage de type 21 peut être dissocié de chaque membre de positionnement de type 121 monté sur la plaque fixe. Dans ce cas, chaque organe de centrage de type 21 forme une pièce indépendante et différente de chaque membre de positionnement de type 121. La réalisation d'une seule pièce, une « douille-colonne », constituant simultanément l'organe de centrage 21 et le membre de positionnement 121, permet toutefois de réduire l'encombrement des composants de guidage de la plaque mobile dans le plan X₂-Y₂ et selon l'axe Z₂.

Selon une autre variante non représentée, l'empilement de rondelles Belleville peut être remplacé par un ressort linéaire travaillant en compression ou par tout organe élastique équivalent.

Selon d'autres variantes non représentées, un ensemble de connexion conforme à l'invention peut comporter un seul organe de positionnement et un seul membre de positionnement, ou plus de deux organes de positionnement et plus de deux membres de positionnement associés.

Par ailleurs, ces organe(s) et membre(s) de positionnement peuvent être montés au niveau de divers emplacements de la plaque mobile, à savoir dans sa région centrale ou dans sa région périphérique. En outre, le dispositif de flottement peut conférer à la plaque mobile un débattement plus important par rapport à, c'est-à-dire autour de et/ou suivant un axe, par exemple X₄, que par rapport à l'autre axe, par exemple Y₄.

Selon une autre variante non représentée, il est possible d'inverser le montage des composants de guidage ; ainsi, la plaque mobile peut comporter une douille de positionnement et une colonne de centrage, éventuellement sous la forme d'une douille-colonne, tandis que le support fixe comporte une colonne de positionnement et que la plaque fixe comporte une douille de centrage.

Selon une autre variante non représentée, la plaque mobile comporte une douille de positionnement et une douille de centrage, tandis que le support fixe comporte une colonne de positionnement et que la plaque fixe comporte une colonne de centrage.

Selon une autre variante non représentée, chaque surface interne ou externe respective des composants de guidage, tels que les douilles de centrage, colonnes de centrage, douilles de positionnement et colonnes de positionnement, est en forme de prisme dont l'axe est sensiblement parallèle à la direction d'engagement de ces composants et dont la base est adaptée pour permettre la coopération de ces surfaces entre elles. Un tel prisme peut par exemple avoir une base hexagonale.

Le procédé objet de l'invention pour la connexion de la plaque mobile 2 sur la plaque fixe 3 va être décrit ci-après, en rotation notamment avec les figures 3 à 8.

Pour connecter la plaque mobile 2 sur la plaque fixe 3, un chariot de transport non représenté, sur lequel est monté l'actionneur 4, amène la plaque mobile 2 en face de la plaque fixe 3. Au cours d'une étape préalable du procédé de connexion objet de l'invention, le chariot de transport, qui est mobile suivant les axes X₄, Y₄ et Z₄, place l'ensemble de connexion 1 avec la plaque mobile 2 dans une position initiale (figures 1, 3 et 5) par rapport à la plaque fixe 3, déterminée de façon à ce que la distance maximale Z₂₁, prise parallèlement à la direction Z₄, entre la pointe conique 311, qui constitue l'extrémité d'engagement d'une colonne de centrage 31 avec la douille de positionnement associée, et l'embouchure conique 416, qui constitue l'extrémité d'engagement de la douille de positionnement 410 correspondante avec la colonne de positionnement associée, soit inférieure à la longueur L₁₂₁ de la colonne de positionnement 121.

Plus précisément, la distance maximale Z₂, doit être inférieure à la longueur L₁₂₁ correspondant à la distance maximale, prise parallèlement à l'axe Z₂, entre l'extrémité d'engagement de la douille de centrage 21 de la plaque mobile 2 avec la plaque fixe 3, ici l'embouchure conique 215, et l'extrémité d'engagement de la colonne de positionnement 121 de la plaque mobile 2 avec le support fixe 41, ici la pointe conique 216.

On obtient ainsi la continuité du guidage de la plaque mobile, si bien que chaque colonne de centrage 31 commence à s'emboîter dans la douille de centrage 21 correspondante, alors que chaque colonne de positionnement 121 quitte la douille de positionnement 410 correspondante. Préalablement, le chariot place la plaque mobile 2 dans une position où son défaut de positionnement relatif par rapport à la plaque fixe 3 est compatible avec le débattement permis par le dispositif de flottement 43.

A l'état déconnecté et en position rétractée, la plaque mobile 2, peut présenter un défaut de positionnement relatif par rapport à la plaque fixe 3, c'est-à-dire un défaut de centrage dans le plan X₂-Y₂ et un écart angulaire entre les plans X₂-Y₂ et X₃-Y₃.

Puis, on commande l'actionneur 4, de façon à ce que la tige de vérin 421 déplace la plaque mobile 2 vers la plaque fixe 3 suivant l'axe Z₄. Au début de cette translation de la plaque mobile 2, chaque colonne de positionnement 121 est guidée dans une douille de positionnement 410 complémentaire, en position moyenne, par la coopération de la deuxième portion cylindrique externe 217 avec la deuxième surface interne cylindrique 417.

Dans le cas où la tige de vérin 421 ne se trouve pas en position rétractée, mais au contraire en position étendue, une étape préalable à la translation de la plaque mobile 2 vers la plaque fixe 3 peut consister à rétracter la plaque mobile 2, c'est-à-dire à engager chaque colonne de positionnement 121 dans chaque douille de positionnement 410 jusqu'au contact entre la réduction tronconique externe 218 et la réduction tronconique interne 418, de façon à positionner la plaque mobile 2 à jeu radial réduit par rapport au support fixe 41 en position moyenne de flottement. La plaque mobile 2 peut donc se trouver à l'état connecté ou à l'état déconnecté par rapport à la plaque fixe 3 et, lorsqu'elle se trouve à l'état déconnecté, la plaque mobile 2 peut être placée dans une position rétractée ou dans une position étendue.

Le débattement de la plaque mobile 2 permis par le dispositif de flottement 43 par rapport au support fixe 41 permet de compenser, d'une part, le décalage d existant entre l'extrémité de chaque colonne de centrage 31 et l'axe de chaque douille de centrage 21 au début de leur engagement et, d'autre part, le défaut angulaire entre les plans X₂-Y₂ et X₃-Y₃, qui n'est pas représenté sur les figures.

Dès que la deuxième portion cylindrique externe 217 coopère avec la première surface interne cylindrique 419, le dispositif de flottement 43 rend possible un début de débattement de la plaque mobile 2, si bien que la douille de centrage 21 est déjà « flottante » lorsqu'elle accoste la colonne de centrage 31.

Lorsque la tige de vérin 421 poursuit la translation de la plaque mobile 2 vers la plaque fixe 3, la plaque mobile 2 adapte sa position pour que chaque douille de centrage 21 s'engage autour de la colonne de centrage 31 correspondante, avec un jeu radial décroissant au fur et à mesure de leur guidage mutuel, comme le montrent les figures 6 et 7.

Au moment où chaque colonne de positionnement 121 quitte la douille de positionnement 410 correspondante, c'est-à-dire au moment où la pointe conique 216 quitte l'embouchure tronconique 416, chaque colonne de centrage 31 de la plaque fixe 3 commence à s'engager dans la douille de centrage 21 associée de la plaque mobile 2. La pointe conique 311 est guidée par l'embouchure tronconique 215, comme le montre la figure 6.

Comme le montre la figure 8, lorsque la plaque mobile 2 parvient en butée contre la plaque fixe 3, les surfaces cylindriques et coniques respectives, plus particulièrement les surfaces 214, 212 et 314, 312, de ces composants de guidage se trouvent mutuellement en regard. La plaque mobile 2 et la plaque fixe 3 se trouvent alors à l'état connecté, dans lequel la position de la plaque mobile 2 s'est adaptée aux défauts de positionnement relatif et dans lequel les éléments de connecteurs 20 et 30 respectifs de la plaque mobile 2 et de la plaque fixe 3 sont connectés entre eux, de façon à raccorder les circuits C₂₀ et C₃₀ de type(s) hydraulique, pneumatique et/ou électrique. Des détecteurs non représentés peuvent signaler l'achèvement de la connexion entre plaques, indiquant ainsi que la raccordement est effectif. A l'état connecté, chaque colonne de centrage 31 de la plaque fixe 3 coopère avec la douille de centrage 21 correspondante selon un ajustement relativement précis qui présente un jeu radial de l'ordre de 0,5 mm.

Lorsque la plaque mobile 2 est en position rétractée, le jeu radial entre les surfaces coniques ou cylindriques 216 à 219 de chaque colonne de positionnement 121 et les surfaces cylindriques ou coniques 416 à 419 complémentaires de chaque douille de positionnement 410 correspondante, peut être d'environ 1 mm, car la précision nécessaire à l'état déconnecté est moindre.

Les variantes de l'invention décrites ci-dessus apportent des avantages mentionnés ci-après.

Tout d'abord, l'ensemble de connexion autorise des tolérances relativement élevées vis-à-vis des défauts de positionnement relatif, centrage et parallélisme, entre la plaque mobile et la plaque fixe.

De plus, les composants de guidage d'un ensemble de connexion conforme à l'invention représentent un encombrement relativement faible, notamment dans le plan de la plaque mobile, en particulier dans le cas où la plaque mobile comporte des « douilles-colonnes ». Par conséquent, un tel ensemble de connexion peut tolérer des défauts de positionnement plus importants pour un même encombrement dans le plan de la plaque mobile.

Par ailleurs, lorsque la plaque mobile est placée en position rétractée par l'organe mobile de l'actionneur, c'est-à-dire lorsque la tige est rentrée dans le boîtier du vérin, la coopération entre organe et membre de positionnement limite, voire évite, le flottement de la plaque mobile. Après chaque connexion, la rétraction de la plaque mobile en position moyenne permet de conserver les mêmes tolérances de positionnement relatif admissibles entre plaque mobile et plaque fixe en vue d'une connexion ultérieure, pour un dimensionnement identique des composants de guidage. En outre, la coopération du support fixe et de la plaque mobile en position rétractée garantit un retour précis en position moyenne.

De plus, les vibrations de la plaque mobile sont réduites par rapport aux ensembles de connexions de l'art antérieur, ce qui diminue les risques d'altération de la plaque mobile et de modification de sa position lorsque le chariot de transport déplace l'ensemble de connexion. Au contraire, un ensemble de connexion de l'art antérieur n'empêche pas le débattement de la plaque mobile par rapport au support fixe en position rétractée, si bien que cette plaque mobile peut quitter sa position moyenne même lorsqu'elle est en position rétractée.

L'étagement des composants de guidage, en particulier des « douilles-colonnes », garantit un jeu radial de montage décroissant au fur et à mesure de l'engagement des composants de guidage, ce qui évite les coincements entre composants de guidage. De plus, cet étagement permet de faire momentanément coopérer simultanément, d'une part, chaque organe et chaque membre de centrage et, d'autre part, chaque organe et chaque membre de positionnement. On obtient ainsi un guidage continu et sans coincement de la plaque mobile entre le support fixe et la plaque fixe.

D'autre part, le ou chaque organe de positionnement de la plaque mobile, qui assure le recentrage de la plaque mobile par rapport à l'actionneur, est sensiblement coaxial au ou à chaque membre de centrage de la plaque mobile, ce qui limite l'encombrement de la plaque mobile.

Lors de la déconnexion de la plaque mobile 2 et de la plaque fixe 3, la tige de vérin 421 rétracte la plaque mobile 2 avec le dispositif de flottement 43. Au début de ce mouvement, chaque colonne de centrage 31 guide avec précision la douille de centrage 21 correspondante, ce qui permet de désaccoupler les éléments de connecteurs 20 et 30 de manière colinéaire et sans faire subir à ces derniers de contraintes excessives.

Après le désaccouplement des éléments de connecteurs 20 et 30, le jeu radial suivant le plan X₂-Y₂ augmente entre chaque colonne de centrage 31 et chaque douille de centrage 21 correspondante lors de la coopération des surfaces 312 et 214, ce qui rend possible un début de débattement de la plaque mobile 2 par le dispositif de flottement 43. Puis, lorsque chaque colonne de centrage 31 quitte l'embouchure conique 215 de la douille de centrage 21 correspondante, la pointe conique 216 de chaque colonne de positionnement 121 se trouve au contact de chaque douille de positionnement 410 correspondante, car la distance maximale Z₂₁ est inférieure à la longueur L₁₂, de la douille-colonne 21-121. Ainsi, il y a aussi une continuité du guidage entre les composants de guidage lors de la déconnexion de la plaque mobile 2 et de la plaque fixe 3.

Chaque douille de positionnement 410 guide enfin le débattement de la colonne de positionnement 121 correspondante, avec un jeu radial décroissant au fur et à mesure de la coopération des surfaces 217 et 419, puis 217 et 417 et 219 et 419, jusqu'à l'état déconnecté et rétracté de la plaque mobile 2 hors de la plaque fixe 3. Dans cette position rétractée, la plaque mobile 2 est ramenée en position moyenne. L'ensemble de connexion 1 est alors disponible pour une nouvelle connexion de sa plaque mobile 2 sur une plaque fixe.

Toute combinaison techniquement admissible des caractéristiques techniques énoncées ci-dessus constitue une variante supplémentaire de l'invention.

## Revendications

1. Ensemble de connexion (1) d'une plaque mobile (2) à au moins une plaque fixe (3), pour raccorder des circuits de type hydraulique, pneumatique et/ou électrique, ledit ensemble de connexion (1) comprenant :
- une plaque mobile (2) comportant :
- plusieurs éléments de connecteurs (20) aptes à être accouplés à des éléments de connecteurs (30) complémentaires montés sur la plaque fixe (3) ;
- au moins un organe de centrage (21) apte à coopérer avec la plaque fixe (3) à l'état connecté des plaques (2, 3), de façon à positionner la plaque mobile (2) par rapport à la plaque fixe (3) ;
- un actionneur (4) comportant :
- un support fixe (41) ;
- un organe mobile (42) apte à déplacer, suivant une direction de connexion (Z₄), la plaque mobile (2) par rapport au support fixe (41) entre une première position rétractée correspondant à un état déconnecté de la plaque mobile par rapport à la plaque fixe et une deuxième position correspondant à un état connecté de ces plaques ;
- un dispositif de flottement (43) agencé entre l'organe mobile (42) de l'actionneur (4) et la plaque mobile (2), de façon à permettre, lorsque la plaque mobile (2) est entre ses première et deuxième positions, au moins un débattement de la plaque mobile (2) par rapport au support fixe (41) en rotation autour et/ou en translation suivant au moins un axe (X₄, Y₄) perpendiculaire à la direction de connexion (Z₄) ;
ledit ensemble de connexion (1) étant **caractérisé en ce que** la plaque mobile (2) comporte en outre au moins un membre de positionnement (121), **en ce que** le support fixe (41) comporte en outre au moins un organe de positionnement (410) solidarisé au support fixe (41) et **en ce que** le ou chaque membre de positionnement (121) est apte à coopérer avec le ou chaque organe de positionnement (410) de façon à positionner la plaque mobile (2) par rapport au support fixe (41), alors que la plaque mobile (2) est dans la première position.

2. Ensemble de connexion (1) selon la revendication 1, **caractérisé en ce que** le ou chaque organe de centrage est destiné à coopérer par complémentarité de formes avec un membre de centrage correspondant disposé sur la plaque fixe (3) et **en ce que** le ou chaque organe de centrage est formé par une douille de centrage (21) ou par une colonne de centrage.

3. Ensemble de connexion (1) selon l'une des revendications 1 ou 2, **caractérisé en ce que** le ou chaque membre de positionnement (121) et le ou chaque organe de positionnement (410) sont aptes à coopérer par complémentarité de formes et **en ce que** le ou chaque membre de positionnement (121) est formé par une colonne de positionnement ou par une douille de positionnement, le ou chaque organe de positionnement (410) étant respectivement formé par une douille de positionnement ou par une colonne de positionnement.

4. Ensemble de connexion (1) selon les revendications 2 et 3, **caractérisé en ce qu'**au moins un organe de centrage (21) est coaxial à un membre de positionnement (121).

5. Ensemble de connexion (1) selon la revendication 4, **caractérisé en ce qu'**au moins un organe de centrage (21) est réalisé au sein d'un membre de positionnement (121).

6. Ensemble de connexion (1) selon l'une des revendications 3 à 5, **caractérisé en ce que** la ou chaque colonne de positionnement (121) et la ou chaque douille de positionnement (21) présentent une symétrie de révolution autour d'un axe (Z₃, Z₄) qui est sensiblement parallèle à la direction de connexion (Z₄), lorsque la plaque mobile (2) est dans la première position.

7. Ensemble de connexion (1) selon la revendication 6, **caractérisé en ce que** la ou chaque douille de positionnement (410) et la ou chaque colonne de positionnement (121) comportent respectivement une succession de surfaces coniques (216, 218, 416, 418) et de surfaces cylindriques (217, 219, 417, 419) et **en ce que** ces surfaces coniques et cylindriques, ménagées respectivement sur la douille de positionnement, d'une part, et sur la colonne de positionnement, d'autre part, sont sensiblement complémentaires avec des dimensions (D₂₁₇, D₂₁₉, D₄₁₇, D₄₁₉) décroissantes de façon à permette l'introduction avec jeu radial décroissant de la ou chaque colonne de positionnement (121) dans une douille de positionnement (410) correspondante.

8. Ensemble de connexion (1) selon la revendication 7, **caractérisé en ce que** la surface conique (216), située à l'extrémité, du côté du support fixe (41 ), du ou de chaque membre de positionnement (121) et la surface conique (416), située à l'extrémité, du côté de la plaque mobile (2), du ou de chaque organe de positionnement (410) ont des demi-angles au sommet respectifs compris entre 20° et 40°, de préférence entre 27° et 33°.

9. Ensemble de connexion (1) selon l'une des revendications 1 à 8, **caractérisé en ce que** le dispositif de flottement (43) comprend au moins un organe élastique (431) qui est disposé entre la plaque mobile (2) et l'organe mobile (42) et qui est composé d'un empilement de rondelles élastiques ou d'un ressort linéaire travaillant en compression.

10. Ensemble de connexion (1) selon l'une des revendications 1 à 9, **caractérisé**(e) en ce que le ou chaque organe de positionnement (410) est agencé sur le support fixe (41) de sorte que le ou chaque membre de positionnement (121) se trouve en position moyenne dans l'amplitude du débattement permis par le dispositif de flottement (43), lorsque l'organe mobile (42) positionne la plaque mobile (2) dans la première position, déconnectée et rétractée.

11. Procédé de connexion d'une plaque mobile (2) à au moins une plaque fixe (3), pour raccorder des circuits de type(s) hydraulique, pneumatique et/ou électrique, ladite plaque mobile (2) appartenant audit ensemble de connexion (1) et comportant :
- plusieurs éléments de connecteurs (20) ;
- au moins un organe de centrage (21) ;
- au moins un membre de positionnement (121) ;
ladite plaque fixe (3) comportant :
- plusieurs éléments de connecteurs (30) aptes à être accouplés aux éléments de connecteurs (20) de la plaque mobile (2) ;
- au moins un membre de centrage (31) apte à coopérer avec l'organe de centrage (21) à l'état connecté des plaques (2, 3) ;
ledit ensemble de connexion (1) comprenant en outre un actionneur (4) qui comporte :
- un support fixe (41);
- un organe mobile (42) apte à déplacer, suivant une direction de connexion (Z₄), la plaque mobile (2) par rapport au support fixe (41) entre une première position rétractée correspondant à un état déconnecté de la plaque mobile par rapport à la plaque fixe et une deuxième position correspondant à un état connecté de ces plaques ;
- un dispositif de flottement (43) agencé entre l'organe mobile (42) et la plaque mobile (2), de façon à permettre au moins un débattement de la plaque mobile (2) par rapport au support fixe (41) en rotation autour et/ou en translation suivant au moins un axe (X₄, Y₄) perpendiculaire à la direction de connexion (Z₄) ;
le procédé de connexion étant **caractérisé en ce qu'**il comprend les étapes consistant à :
b) amener en engagement au moins un membre de positionnement (121) porté par la plaque mobile (2) avec un organe de positionnement (410) correspondant porté par le support fixe (41) de façon à positionner la plaque mobile (2) par rapport au support fixe (41) alors que la plaque mobile (2) est dans la première position ;
c) commander l'actionneur (4) pour déplacer la plaque mobile (2) vers la plaque fixe (3) suivant une direction de connexion (Z₄) ;
d) amener en engagement le ou chaque membre de centrage (31) avec l'organe de centrage (21) correspondant, de façon à positionner la plaque mobile (2) par rapport à la plaque fixe (3) ;
e) accoupler les éléments de connecteurs (20, 30) respectifs de la plaque mobile (2) et de la plaque fixe (3).

12. Procédé de connexion selon la revendication 11, **caractérisé en ce qu'**il comprend une étape préalable consistant à :
a) placer l'ensemble de connexion (1) dans une position initiale (fig.1, fig.5) déterminée de façon à ce que la distance maximale (Z₂₁), selon la direction de connexion (Z₄) entre, d'une part une extrémité (311) d'un membre de centrage (31) de la plaque fixe (3), qui est destinée à venir en engagement avec un organe de centrage (21), et d'autre part, une extrémité (416) de l'organe de positionnement (410) correspondant du support fixe (41), qui est destinée à venir en engagement avec un membre de positionnement (121) soit inférieure à la distance maximale (L₁₂₁) entre, d'une part, une extrémité (215) de l'organe de centrage (21) de la plaque mobile (2), qui est destinée à venir en engagement avec le membre de centrage (31), et d'autre part, une extrémité (216) du membre de positionnement (121) correspondant de la plaque mobile (2), qui est destinée à venir en engagement avec l'organe de positionnement (410).

## Claims

1. A connection assembly (1) for a movable plate (2) to at least one fixed plate (3) in order to connect hydraulic, pneumatic and/or electric circuits, said connection assembly (1) comprising:
- a movable plate (2) comprising:
- several connector elements (20) capable of being coupled to matching connector elements (30) mounted on the fixed plate (3);
- at least one centring component (21) capable of interacting with the fixed plate (3) in the connected state of the plates (2, 3), so as to position the movable plate (2) relative to the fixed plate (3);
- an actuator (4) comprising:
- a fixed support (41);
- a movable component (42) capable of moving, in a direction of connection (Z₄), the movable plate (2) relative to the fixed support (41) between a first retracted position corresponding to a disconnected state of the movable plate relative to the fixed plate and a second position corresponding to a connected state of these plates;
- a fluttering device (43) arranged between the movable component (42) of the actuator (4) and the movable plate (2), so as to allow, when the movable plate (2) is between its first and second positions, at least one range of movement of the movable plate (2) relative to the fixed support (41) in rotation about and/or in translation along at least one axis (X₄, Y₄) perpendicular to the direction of connection (Z₄);
wherein the movable plate (2) also comprises at least one positioning member (121), the fixed support (41) also comprising at least one positioning component (410) secured to the fixed support (41) and the or each positioning member (121) being capable of interacting with the or each positioning component (410) so as to position the movable plate (2) relative to the fixed support (41) while the movable plate (2) is in the first position.

2. The connection assembly (1) of Claim 1, wherein the or each centring component is designed to interact by matching shapes with a corresponding centring member placed on the fixed plate (3) and the or each centring component is formed by a centring socket (21) or by a centring post.

3. The connection assembly (1) of Claim 1, wherein the or each positioning member (121) and the or each positioning component (410) are capable of interacting by the matching of shapes, and the or each positioning member (121) is formed by a positioning post or by a positioning socket, the or each positioning component (410) being formed respectively by a positioning socket or by a positioning post.

4. The connection assembly (1) of Claims 2 and 3, wherein at least one centring component (21) is coaxial with a positioning member (121).

5. The connection assembly (1) of Claim 4, wherein at least one centring component (21) is made within a positioning member (121).

6. The connection assembly (1) of Claim 3, wherein the or each positioning post (121) and the or each positioning socket (21) have a symmetry of revolution about an axis (Z₃, Z₄) which is substantially parallel to the direction of connection (Z₄) , when the movable plate (2) is in the first position.

7. The connection assembly (1) of Claim 6, wherein the or each positioning socket (410) and the or each positioning post (121) comprise respectively a succession of conical surfaces (216, 218, 416, 418) and of cylindrical surfaces (217, 219, 417, 419), and these conical and cylindrical surfaces, respectively arranged on the positioning socket, on the one hand, and on the positioning post, on the other hand, are substantially matching with decreasing dimensions (D₂₁₇, D₂₁₉, D₄₁₇, D₄₁₉) so as to allow the insertion with decreasing radial clearance of the or each positioning post (121) into a corresponding positioning socket (410).

8. The connection assembly (1) of to Claim 7, wherein the conical surface (216), situated at the end, on the side of the fixed support (41), of the or each positioning member (121) and the conical surface (416), situated at the end, on the side of the movable plate (2), of the or each positioning component (410) have respective half-angles at the apex of between 20° and 40°, preferably between 27° and 33°.

9. The connection assembly (1) of Claims 1, wherein the fluttering device (43) comprises at least one elastic component (431) which is placed between the movable plate (2) and the movable component (42) and which consists of a stack of elastic washers or of a linear sparing working in compression.

10. The connection assembly (1) of Claim 1, wherein the or each positioning component (410) is arranged on the fixed support (41) so that the or each positioning member (121) is found in the middle position in the range of movement allowed by the fluttering device (43), when the movable component (42) positions the movable plate (2) in the first, disconnected and retracted position.

11. A method for connecting a movable plate (2) to at least one fixed plate (3), in order to connect hydraulic, pneumatic and/or electric circuits, said movable plate (2) belonging to said connection assembly (1) and comprising:
- several connector elements (20);
- at least one centring component (21);
- at least one positioning member (121);
said fixed plate (3) comprising:
- several connector elements (30) capable of being coupled to the connector elements (20) of the movable plate (2);
- at least one centring member (31) capable of interacting with the centring component (21) in the connected state of the plates (2, 3);
said connection assembly (1) also comprising an actuator (4) which comprises:
- a fixed support (41) ;
- a movable component (42) capable of moving, in a direction of connection (Z₄), the movable plate (2) relative to the fixed support (41) between a first retracted position corresponding to a disconnected state of the movable plate relative to the fixed plate and a second position corresponding to a connected state of these plates;
- a fluttering device (43) arranged between the movable component (42) and the movable plate (2), so as to allow at least one range of movement of the movable plate (2) relative to the fixed support (41) in rotation about and/or in translation along at least one axis (X₄, Y₄) perpendicular to the direction of connection (Z₄);
wherein said method comprises the steps consisting in:
b) bringing into engagement at least one positioning member (121) supported by the movable plate (2) with a corresponding positioning component (410) supported by the fixed support (41) so as to position the movable plate (2) relative to the fixed support (41) while the movable plate (2) is in the first position;
c) controlling the actuator (4) in order to move the movable plate (2) towards the fixed plate (3) in a direction of connection (Z₄);
d) bringing into engagement the or each centring member (31) with the corresponding centring component (21), so as to position the movable plate (2) relative to the fixed plate (3);
e) coupling the respective connector elements (20, 30) of the movable plate (2) and of the fixed plate (3).

12. The method of Claim 11, wherein said method comprises a prior step consisting in:
a) placing the connection assembly (1) in an initial position (Fig. 1, Fig.5) determined so that the maximum distance (Z₂₁), in the direction of connection (Z₄) between, on the one hand, an end (311) of a centring member (31) of the fixed plate (3), which is designed to come into engagement with a centring component (21), and, on the other hand, an end (416) of the corresponding positioning component (410) of the fixed support (41), which is designed to come into engagement with a positioning member (121), is less than the maximum distance (L₁₂₁) between, on the one hand, an end (215) of the centring component (21) of the movable plate (2), which is designed to come into engagement with the centring member (31), and, on the other hand, an end (216) of the corresponding positioning member (121) of the movable plate (2), which is designed to come into engagement with the positioning component (410).

## Patentansprüche

1. Verbindungsanordnung (1) einer beweglichen Platte (2) mit mindestens einer feststehenden Platte (3), um hydraulische, pneumatische und/oder elektrische Kreise anzuschließen, wobei die Verbindungsanordnung (1) umfasst:
- eine bewegliche Platte (2) einschließend:
- mehrere Anschlusssteckelemente (20), die geeignet sind, mit komplementären Anschlusssteckelementen (30), die an der feststehenden Platte (3) angeordnet sind, gekoppelt zu werden;
- mindestens ein Zentrierorgan (21), das geeignet ist, mit der feststehenden Platte (3) im verbundenen Zustand der Platten (2, 3) zusammenzuarbeiten, um die bewegliche Platte (2) in Bezug auf die feststehende Platte (3) zu positionieren;
- ein Betätigungselement (4), einschließend:
- einen feststehenden Träger (41);
- ein bewegliches Organ (42), das geeignet ist, gemäß einer Verbindungsrlchtung (Z₄) die bewegliche Platte (2) in Bezug auf den feststehenden Träger (41) zwischen einer ersten zurückgezogenen Position, die dem abgekuppelten Zustand der beweglichen Platte in Bezug auf die feststehende Platte entspricht, und einer zweiten, dem verbundenen Zustand dieser Platten entsprechenden Position zu verschieben;
- eine schwimmende Vorrichtung (43), die zwischen dem beweglichen Organ (42) des Betätigungselements (4) und der beweglichen Platte (2) angeordnet ist, um mindestens einen Ausschlag der beweglichen Platte (2) in Bezug auf den feststehenden Träger (41) in Drehung um und/oder in Längsbewegung gemäß mindestens einer Achse (X₄, Y₄), senkrecht zur Verbindungsrichtung (Z₄) zu ermöglichen, wenn die bewegliche Platte (2) zwischen ihrer ersten und zweiten Position ist;
wobei die Verbindungsanordnung (1) **dadurch gekennzeichnet ist, dass** die bewegliche Platte (2) außerdem mindestens ein Positionierelement (121) aufweist, dass der feststehende Träger (41) außerdem mindestens ein Positionierorgan (410) aufweist, das mit dem feststehenden Träger (41) verbunden ist, und dass das oder jedes Positionierelement (121) geeignet ist, mit dem oder jedem Positionierorgan (410) zusammenzuarbeiten, um die bewegliche Platte (2) in Bezug auf den feststehenden Träger (41) zu positionieren, während die bewegliche Platte (2) in der ersten Position ist.

2. Verbindungsanordnung (1) nach Anspruch 1, **dadurch gekennzeichnet, dass** das oder jedes Zentrierorgan vorgesehen ist, durch Formenschluss mit einem korrespondierenden Zentrierelement zusammenzuarbeiten, das auf der feststehenden Platte (3) angeordnet ist, und dass das oder jedes Zentrierorgan von einer Zentrierbuchse (21) oder einem Zentrierstift gebildet wird.

3. Verbindungsanordnung (1) nach einem der Ansprüche 1 oder 2, **dadurch gekennzeichnet, dass** das oder jedes Positionierelemerit (121) und das oder jedes Positionierorgan (410) geeignet sind, durch Formenschluss zusammenzuarbeiten und dass das oder jedes Positionierelement (121) durch einen Positionierstift oder eine Positionierbuchse gebildet wird, wobei das oder jedes Positionierorgan (410) entsprechend durch eine Positionierbuchse oder durch einen Positionierstift gebildet wird.

4. Verbindungsanordnung (1) nach den Ansprüchen 2 und 3, **dadurch gekennzeichnet, dass** mindestens ein Zentrierorgan (21) koaxial zu einem Positionierelement (121) ist.

5. Verbindungsanordnung (1) nach Anspruch 4, **dadurch gekennzeichnet, dass** mindestens ein Zentrierorgan (21) an einem Positionlerelement (121) ausgebildet ist.

6. Verbindungsanordnung (1) nach einem der Ansprüche 3 bis 5, **dadurch gekennzeichnet, dass** der oder jeder Positionierstift (121) und die oder jede Positionierbuchse (21) eine Drehsymmetrie um eine Achse (Z₃, Z₄) aufweisen, die im Wesentlichen parallel zu der Verbindungsrichtung (Z₄) ist, während die bewegliche Platte (2) in der ersten Position ist.

7. Verbindungsanordnung (1) nach Anspruch 6, **dadurch gekennzeichnet, dass** die oder jede Positionierbuchse (410) und der oder jeder Positionierstift (121) jeweils eine Folge von konischen Flächen (216, 218, 416, 418) und von zylindrischen Flächen (217, 219, 417, 419) aufweisen und dass diese konischen und zylindrischen Flächen, die jeweils an der Positionierbuchse einerseits und an dem Positionierstift andererselts eingearbeitet sind, im Wesentlichen komplementär mit abnehmenden Abmessungen (D₂₁₇, D₂₁₉, D₄₁₇, D₄₁₉) sind, um die Einführung des oder jedes Positionierstifts (121) in eine entsprechende Positionierbuchse (410) mit einem radial abnehmenden Spiel zu ermöglichen.

8. Verbindungsanordnung (1) nach Anspruch 7, **dadurch gekennzeichnet, dass** die konische Fläche (216), die am Ende an der Seite des feststehenden Trägers (41) des oder jedes Positionierelements (121) liegt, und die konische Fläche (416), die am Ende an der Seite der beweglichen Platte (2) des oder jedes Positionierorgans (410) liegt, jeweilige Halbscheitelwinkel haben, die zwischen 20° und 40°, vorzugsweise zwischen 27° und 33° liegen.

9. Verbindungsanordnung (1) nach einem der Ansprüche 1 bis 8, **dadurch gekennzeichnet, dass** die schwimmende Vorrichtung (43) mindestens ein elastisches Organ (431) umfasst, das zwischen der beweglichen Platte (2) und dem beweglichen Organ (42) angeordnet ist und das aus einem Stapel von elastischen Scheiben oder aus einer linearen Feder, die auf Druck arbeitet, zusammengesetzt ist.

10. Verbindungsanordnung (1) nach einem der Ansprüche 1 bis 9, **dadurch gekennzeichnet, dass** das oder jedes Positionierorgan (410) an dem feststehenden Träger (41) derart angeordnet ist, dass das oder jedes Positionierelement (121) sich in der mittleren Position der Amplitude des von der schwimmenden Vorrichtung (43) erlaubten Ausschlags befindet, wenn das bewegliche Organ (42) die bewegliche Platte (2) in der ersten, abgekoppelten und zurückgezogenen Position positioniert.

11. Verfahren zum Verbinden einer beweglichen Platte (2) mit mindestens einer feststehenden Platte (3), um hydraulische, pneumatische und/oder elektrische Kreise zu koppeln, wobei die bewegliche Platte (2) zu der Verbindungsanordnung (1) gehört und umfasst:
- mehrere Anschlusssteckelemente (20);
- mindestens ein Zentrierorgan (21);
- mindestens ein Positionierelement (121);
wobei die feststehende Platte (3) umfasst:
- mehrere Anschlusssteckelemente (30), die geeignet sind, mit den Anschlusssteckelementen (20) der beweglichen Platte (2) gekoppelt zu werden;
- mindestens ein Zentrierelement (31), das geeignet ist, mit dem Zentrierorgan (21) im verbundenen Zustand der Platten (2, 3) zusammenzuarbeiten;
wobei die Verbindungsanordnung (1) außerdem ein Betätigungselement (4) umfasst, das einschließt:
- einen feststehenden Träger (41);
- ein bewegliches Organ (42), das geeignet ist, gemäß einer Verbindungsrichtung (Z₄) die bewegliche Platte (2) in Bezug auf den feststehenden Träger (41) zwischen einer ersten zurückgezogenen Position entsprechend einem abgekoppelten Zustand der beweglichen Platte in Bezug auf die feststehende Platte und einer zweiten, einem verbundenen Zustand dieser Platten entsprechenden Position zu verschieben;
- eine schwimmende Vorrichtung (43), die zwischen dem beweglichen Organ (42) und der beweglichen Platte (2) vorgesehen ist, um mindestens einen Ausschlag der beweglichen Platte (2) in Bezug auf den feststehenden Träger (41) in Drehung um und/oder in Längsbewegung gemäß mindestens einer Achse (X₄, Y₄), senkrecht zu der Verbindungsrichtung (Z₄), zu gestatten;
wobei das Verbindungsverfahren **dadurch gekennzeichnet ist, dass** es die Schritte umfasst, die darin bestehen:
b) mindestens ein von der beweglichen Platte (2) getragenes Verbindungselement (121) mit einem korrespondierenden, von dem feststehenden Träger (41) getragenen Positionierorgan (410) in Eingriff zu bringen, um die bewegliche Platte (2) in Bezug auf den feststehenden Träger (41) zu positionieren, während die bewegliche Platte (2) in der ersten Position ist;
c) das Betätigungselement (4) zu steuern, um die bewegliche Platte (2) gemäß einer Verbindungsrichtung (Z₄) zu der feststehenden Platte (3) zu verschieben;
d) das oder jedes Zentrierelement (31) mit dem korrespondierenden Zentrierorgan (21) in Eingriff zu bringen, um die bewegliche Platte (2) in Bezug auf die feststehende Platte (3) zu positionieren;
e) die jeweiligen Verbindungselemente (20, 30) der beweglichen Platte (2) und der feststehenden Platte (3) zusammen zu koppeln.

12. Verbindungsverfahren nach Anspruch 11, **dadurch gekennzeichnet, dass** es einen vorhergehenden Schritt umfasst, der darin besteht:
a) die Verbindungsanordnung (1) in eine Ausgangsposition (Fig. 1, Fig. 5) zu platzieren, die so bestimmt ist, dass der maximale Abstand (Z₂₁) gemäß der Verbindungsrichtung (Z₄) zwischen einem Ende (311) eines Zentrierelements (31) der feststehenden Platte (3), das vorgesehen ist, in Eingriff mit einem Zentrierorgan (21) zu kommen, einerseits, und einem Ende (416) des korrespondierenden Positionierorgans (410) des feststehenden Trägers (41), das vorgesehen ist, in Eingriff mit einem Positionierelement (121) zu kommen, andererselts, kleiner als der maximale Abstand (L₁₂₁) zwischen einem Ende (215) des Zentrierorgans (21) der beweglichen Platte (2), das vorgesehen ist, in Eingriff mit dem Zentrierelement (31) zu kommen, einerseits, und einem Ende (216) des korrespondierenden Positionierelements (121) der beweglichen Platte (2), das vorgesehen ist, in Eingriff mit dem Positionierorgan (410) zu kommen, andererseits.
